# EUROPEAN PATENT SPECIFICATION

(11) **EP 4 113 194 B1**
(45) Date of publication and mention of the grant of the patent: **18.11.2026**
(21) Application number: 21779644.0
(22) Date of filing: 17.03.2021
(51) Int. Cl.: G02B 27/01, G02B 5/00

(54) **HEAD-MOUNTED DISPLAY DEVICE**
KOPFMONTIERTE ANZEIGEVORRICHTUNG
DISPOSITIF DE TYPE VISIOCASQUE

(30) Priority: 31.03.2020 CN 202010243452
(43) Date of publication of application: 04.01.2023
(73) Proprietor: Beijing Unicorn Technology Co., Ltd., Beijing 100098 (CN)
(72) Inventor: XIAO, Jiasheng, Beijing 100098 (CN); XIAO, Bing, Beijing 100098 (CN)
(74) Representative: Grünecker Patent- und Rechtsanwälte PartG mbB
(86) International application number: PCT/CN2021/081203
(87) International publication number: WO 2021/197060

(56) References cited:
- CN-A- 107 884 934
- CN-A- 108 227 205
- CN-A- 110 095 870
- CN-A- 111 290 127
- CN-U- 209 542 958
- CN-U- 211 577 567
- JP-A- H1 195 160
- KR-A- 20180 014 567
- US-A1- 2019 155 031

## Description

### FIELD

Embodiments of the present application relate generally to the field of smart wearable electronic devices, and more particularly, to a head-mounted display device.

### BACKGROUND

With the continuous development of science and technology, head-mounted display devices are widely used in people's daily life, entertainment and work. With the head-mounted display device, an image can be projected on the retina by utilizing an optical imaging system to magnify an image from the ultra-micro display screen, in turn, a large-screen virtual image is presented in the eyes of a viewer.

At present, when a head-mounted display device displays a virtual image, some undesired light (i.e., stray light) irradiates on the optical imaging device, thus image information carried by the stray light affects imaging quality of the virtual image seen by a user, thereby degrading the user experience with respect to the head-mounted display device.

There is currently no good solution in the industry to the problems described above.

JP H 11 95160 A discloses a head-mounted display device that is mounted on a user's head and that allows a user to visually recognize an image formed by an image display means as a magnified virtual image. The head-mounted display device comprises an optical system. The optical system comprises an image display means, a flat half mirror, a first polarizing plate and a second polarizing plate. The image light emitted from the image display means is incident on the user's eye with almost no absorption by the first polarizing plate. In the unpolarized light coming from below the device, the P-polarized light is absorbed by the second polarizing plate and only the S-polarized light is transmitted.

CN 110 095 870 A discloses an optical display system, a display control device and an augmented reality device. The optical display system includes a first imaging assembly, and a second imaging assembly comprising a first half mirror and a light absorbing panel. The lower edge of the light absorbing plate is flush with the lower edge of the first half mirror of the second imaging assembly. The light absorbing plate is used for absorbing the stray light transmitted from the first half mirror of the second imaging assembly.

CN 108227 205 A discloses a head-mounted display optical system and head-mounted display equipment. The head mounted display optical system includes an image-generating unit, a first lens unit, a first optical unit, and a second optical unit, which are sequentially disposed along an optical path. The head-mounted display optical system further includes a light blocking device for blocking ambient stray light from reaching the first optical unit.

It is the object of the present invention to provide an improved optical arrangement for head-mounted display devices.

This object is solved by the subject matter of the independent claims.

Embodiments are defined in the dependent claims.

According to an aspect of an embodiment of the present application, a head-mounted display device is provided, including an optical imaging apparatus, the optical imaging apparatus includes an image source element, a beam splitter element, and a reflective element configured to be aligned on an optical path; an absorbing element, a structure of the absorbing element and a position of the absorbing element relative to the optical imaging apparatus configured to enable the absorbing element to absorb at least a portion of stray light in a first light region and cause real scene light in a second light region to pass through, the first light region is defined by a human eye mirror position and two ends of the beam splitter element, the second light region is defined by a human eye position, a human eye viewing angle, and an end of the beam splitter element that is away from the image source element, wherein the human eye mirror position is a mirror symmetry point of the human eye position with respect to the beam splitter element.

### BRIEF DESCRIPTION OF THE DRAWINGS

By referring to the following appended drawings, a further understanding of the nature and advantages of the embodiments of the present application may be achieved. In the appended drawings, similar components or features may have the same reference label. The appended drawings are used to provide a further understanding of the embodiments of the present invention and constitute a portion of the present application, and used to, together with the following detailed description, explain the embodiments of the present application, but do not constitute a limitation to the embodiments of the present application. In the appended drawings:
FIG. 1 illustrates a structural schematic diagram of an example of an optical imaging apparatus according to an embodiment of the present application.
FIG. 2 illustrates a structural block diagram of an example of a head-mounted display device according to an embodiment of the present application.
FIG. 3 illustrates a schematic diagram of an example of background stray light absorbed by an absorbing element according to an embodiment of the present application.
FIG. 4A illustrates a schematic diagram of an example of a first light region in an optical imaging apparatus according to an embodiment of the present application.
FIG. 4B illustrates a schematic diagram of an example of a second light region in an optical imaging apparatus according to an embodiment of the present application.
FIG. 5 illustrates a schematic diagram of an angle distribution of an example of included angles between a first light region and a second light region relative to the main optical axis according to an embodiment of the present application.
FIG. 6 illustrates a structural schematic diagram of an example of a head-mounted display device according to an example of the present application, which is not covered by the appended set of claims.
FIG. 7 illustrates a structural schematic diagram of an example of a head-mounted display device according to an embodiment of the present application.
FIG. 8 illustrates a structural schematic diagram of an example of an absorbing element according to the invention of the present application.
FIG. 9 illustrates a structural schematic diagram of an example of an absorbing element according to the invention of the present application.
FIG. 10A illustrates a structural schematic diagram of an example of an absorbing element according to an embodiment of the present application.
FIG. 10B illustrates a structural schematic diagram of an example of an absorbing element according to an embodiment of the present application.
FIG. 10C illustrates a structural schematic diagram of an example of an absorbing element according to an embodiment of the present application.
FIG. 10D illustrates a structural schematic diagram of an example of an absorbing element according to an embodiment of the present application.
FIG. 11 illustrates a structural schematic diagram of an example of a head-mounted display device according to an embodiment of the present application.

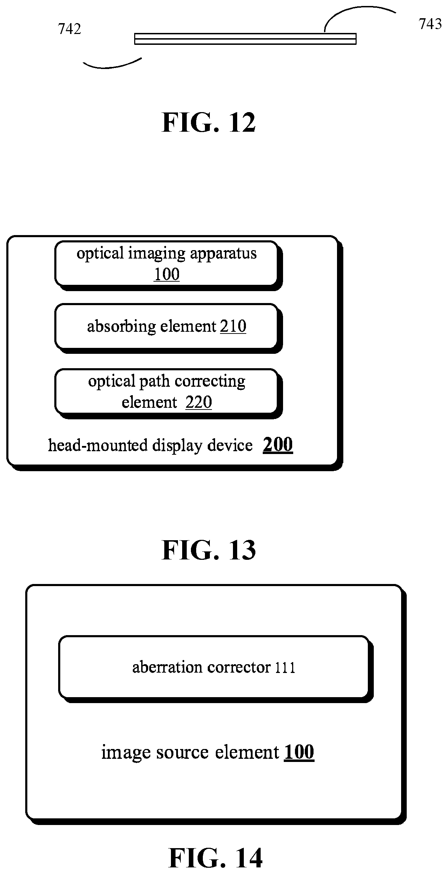

FIG. 12 illustrates a structural schematic diagram of an absorbing structure with a light absorbing coating according to an embodiment of the present application.
FIG. 13 illustrates a structural block diagram of an example of a head-mounted display device according to an embodiment of the present application.
FIG. 14 illustrates a structural block diagram of an example of an image source element according to an embodiment of the present application.

### DETAILED DESCRIPTION

The subject described herein will be discussed below with reference to example embodiments. It should be understood that discussion of these embodiments is only to enable those skilled in the art to better understand and implement the subject described herein, and is not to limit the application. Functions and arrangements of the discussed elements may be changed without departing from the protection scope of the content of embodiments of the present application. Various examples may omit, replace or add various processes or components as needed. In addition, features described with respect to some examples may also be combined in other examples.

As used herein, the term "including" and its variants represents open terms, meaning "including but not limited to." The term "based on" represents "based at least in part on." The terms "one embodiment" and "an embodiment" represent "at least one embodiment." The term "another embodiment" represents "at least one other embodiment." The terms "first", "second", etc. may refer to different or the same objects. Other definitions may be included below, either explicit or implicit. The definition of a term is consistent throughout the application, unless clearly indicated otherwise in the context.

The term "light region" refers to a region in which there is visible light such that physical objects or objects in the light region are visible to human eyes. The term "stray light" refers to undesired light that deviates from the imaging optical path.

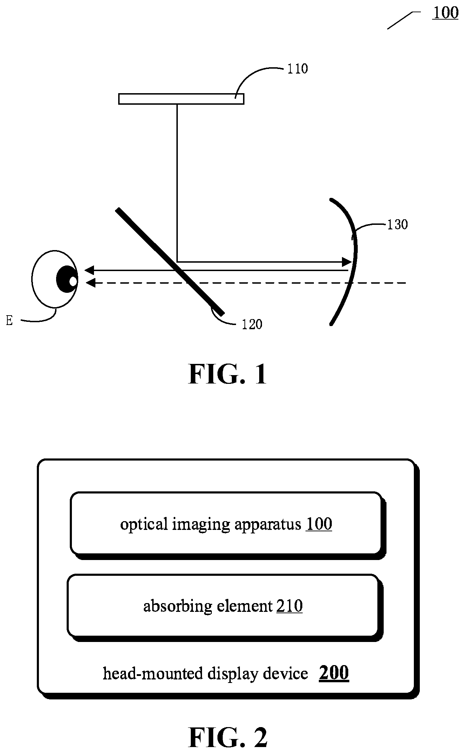

FIG. 1 illustrates a structural schematic diagram of an example of an optical imaging apparatus according to an embodiment of the present application.

An optical imaging apparatus 100 as shown in FIG. 1 includes an image source element 110, a beam splitter element 120, and a reflective element 130. The image source element 110, the beam splitter element 120, and the reflective element 130 are aligned with respect to the optical path. In this way, image light projected by the image source element 110 (represented by a solid line in the figure) is amplified by the beam splitter element 120 and the reflective element 130, such that a virtual image can be seen by an eye at position E to achieve the goal of optical path alignment. In the direction of optical path, the beam splitter element and the reflective element are sequentially arranged downstream of the image source element. For example, the beam splitter element is arranged obliquely below, e.g., directly below, the image source element, and the reflective element is arranged on a side of the beam splitter element. That is, virtual image light projected by the image source element is sequentially reflected by the beam splitter element and the reflective element, and then transmitted through the beam splitter element. Virtual image light passing through the beam splitter element can enter the user's eye. Optionally, the beam splitter element 120 and the light reflective element 130 may be coated with a transflective film or a polarizing film. The beam splitter element 120 and the light reflective element 130 in the optical imaging apparatus 100 are see-through element, such that people can view virtual image scene while viewing real world scene (represented by the dotted line in the drawings), thereby implementing Augmented Reality (AR) display function. When a head-mounted display device is provided with the optical imaging apparatus, the head-mounted display device is an AR device.

It should be noted that elements in an optical imaging apparatus 100 can also be adjusted to implement different display functions. For example, a reflective element 130 is replaced with a non-see-through optical component, such that the optical imaging apparatus 100 can implement Virtual Reality (VR) display function. When a head-mounted display device is provided with such optical imaging apparatus, the head-mounted display device is a VR device.

FIG. 2 illustrates a structural block diagram of an example of a head-mounted display device according to an embodiment of the present application.

As shown in FIG. 2, a head-mounted display device 200 includes an optical imaging apparatus 100 and an absorbing element 210, and the absorbing element 210 can absorb and eliminate visible light. Herein, the absorbing element 210 can eliminate a portion of stray light entering the optical imaging apparatus 100, especially background stray light Z to human eye position E reflected by the beam splitter element 120. It should be understood that human eye position E may represent the position of the user's eye when the user wears the head-mounted display device.

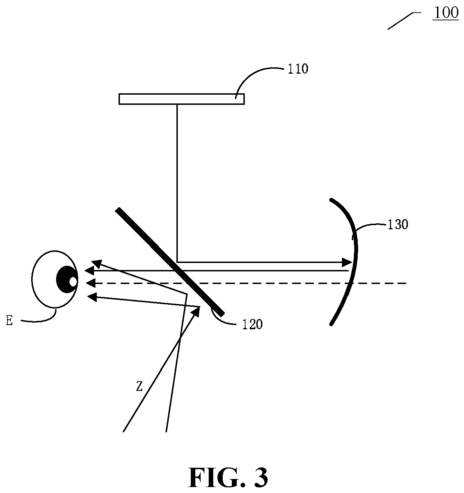

FIG. 3 illustrates a schematic diagram of an example of background stray light absorbed by an absorbing element according to an embodiment of the present application.

As shown in FIG. 3, ambient light coming from the region below an optical imaging apparatus 100 and incident on a beam splitter element 120 is reflected to the human eye position E. At this point, in addition to virtual image scenes and real image scenes that can be seen by human eyes, background image information (e.g., ground, clothes, etc.) carried by background stray light also appear, which interferes with image quality.

In an embodiment of the present application, with an absorbing element 210, at least a part (e.g., a part or all) of background stray light Z can be absorbed and eliminated, thereby improving image display quality.

In some application scenarios, when a user wears a head-mounted display device, although the user does not want to see background image information carried by background stray light in an imaging image, the user also needs to be able to see real scene light in external (e.g., under the device) environment through naked eyes directly or in perspective. Therefore, structure and position relative to an optical imaging apparatus of an absorbing element 210 cannot be set arbitrarily, so as to ensure that at least a portion of background stray light is absorbed meanwhile real scene light incident at the human eye position E is not blocked.

Optionally, the structure of an absorbing element 210 and the arrangement of an optical imaging apparatus 100 enable the absorbing element 210 to at least absorb at least a portion of the stray light in a first light region and cause real scene light in a second light region to pass through. Herein, stray light may mainly include background stray light.

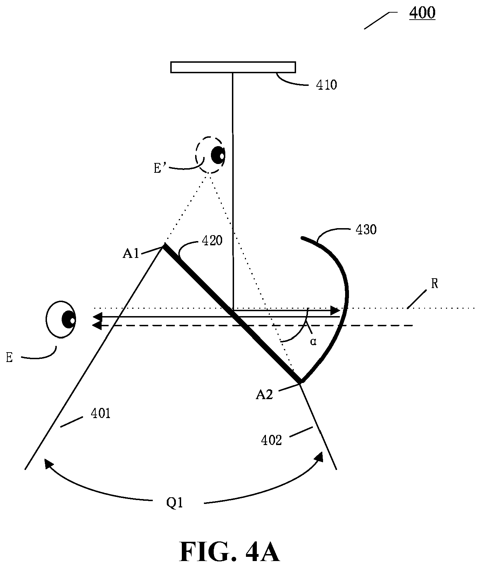

FIG. 4A illustrates a schematic diagram of an example of a first light region in an optical imaging apparatus according to an embodiment of the present application.

As shown in FIG. 4A, an optical imaging apparatus 400 includes an image source element 410, a beam splitter element 420, and a reflective element 430 that are aligned on an optical path. In an example of the present application, an end of the beam splitter element 420 is attached to an end of the reflective element 430 that is away from the image source element 410. A human eye mirror position E' is located at the mirror symmetry point of human eye position E with respect to the beam splitter element 420. Herein, a first light region is defined by the human eye mirror position E' and two ends A1 and A2 of the beam splitter element, e.g., a region formed by two beams of light passing through the A1 and A2 ends respectively and incident at the position E'. That is, it is defined by planes passing through the human eye mirror position E' and two ends A1 and A2 of the beam splitter element. Herein, a main optical axis of the optical imaging apparatus 400 can be represented by R, e.g., an included angle of 45 degrees is defined by the beam splitter element 420 and the main optical axis, and an included angle defined by beams of light in different directions and the main optical axis R can be represented by α. The straight line E'A1 can represent the background stray light 401 defining the largest angle with respect to the main optical axis, and the straight line E'A2 can represent the background stray light 402 defining the smallest angle with respect to the main optical axis, and the light region Q1 corresponding to the angle range of the background stray light can be used to represent the first light region. It may be understood that the beam splitter element 420 has an edge extending in a direction perpendicular to paper surface, and there are a plurality of beams of background stray light 401 and 402 passing through the edge and the human eye mirror position E', and a region defined between a first plane through which these beams of background stray light 401 pass and a second plane through which these beams of background stray light 402 pass defines the first light region.

In an embodiment of the present application, an absorbing element can absorb at least a portion of the stray light in a first light region Q1. Therefore, the absorbing element can absorb reflected light incident at the human eye position through a beam splitter element, thereby eliminating background image information in an imaging image and improving imaging quality.

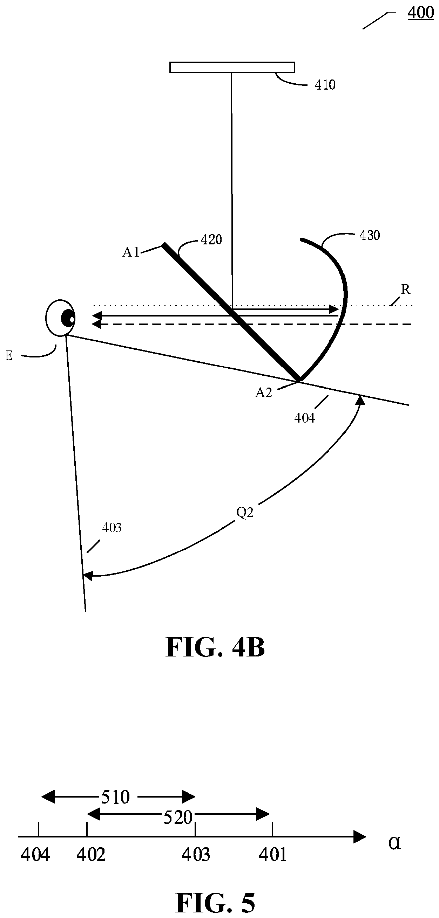

FIG. 4B illustrates a schematic diagram of an example of a second light region in an optical imaging apparatus according to an embodiment of the present application.

As shown in FIG. 4B, a second light region is defined by the human eye position E, a human eye viewing angle, and the end A2 of the beam splitter element 420 that is away from the image source element 410. Herein, the human eye viewing angle can represent a certain degree of maximum viewing angle of human naked eye, e.g., viewing angle of human eye is usually 70°. Further, the maximum line-of-sight direction 403 is defined by the human eye position E and the viewing angle of human eye, and the straight line EA2 can represent the minimum line-of-sight direction 404, and the line-of-sight range Q2 of human eye between the maximum line-of-sight direction and the minimum line-of-sight direction can be used to represent the second light region.

In an embodiment of the present application, an absorbing element allows real scene light in the second light region Q2 to pass through. Therefore, the absorbing element does not block human eye from viewing the real scene of the external environment, which can improve viewing experience of a user using a head-mounted display device.

FIG. 5 illustrates a schematic diagram of an angle distribution of an example of included angles between a first light region and a second light region relative to the main optical axis according to an embodiment of the present application.

As shown in FIG. 5, an included angle interval 510 can represent a second light region Q2 (i.e., line-of-sight angle range) between 403 and 404, and an included angle interval 520 can represent a first light region between 401 and 402 (i.e., stray light angle range). It is not difficult to see that there is a coincident angle interval between the stray light angle range and the line-of-sight angle range. Therefore, in order to absorb at least a portion of stray light in the first light region without blocking real scene light in the second light region, the structure of an absorbing element, and the location of the absorbing element relative to an optical imaging apparatus are particularly important.

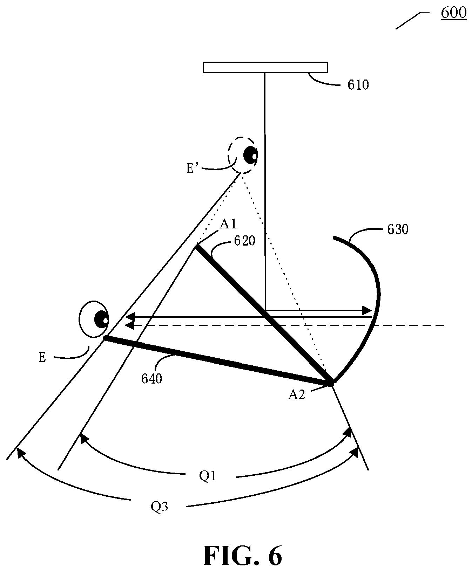

FIG. 6 illustrates a structural schematic diagram of an example of a head-mounted display device according to an example of the present application, which is not covered by the appended set of claims.

As shown in FIG. 6, a head-mounted display device 600 includes an optical imaging apparatus and an absorbing element 640. The optical imaging apparatus includes an image source element 610, a beam splitter element 620, and a reflective element 630 that are aligned on an optical path. In an example of the present application, the plane in which the absorbing element 640 is located passes through the human eye position E and the end (i.e., the A2 end) of the beam splitter element 620 away from the image source element 610. That is, the absorbing element 640 is coincident with the minimum line-of-sight direction, such that the light absorbing element 640 does not block real scene light within the field of view of the human eye. In addition, a region defined by straight lines passing through a human eye mirror position E' and two ends of the absorbing element covers a first light region. Referring to the example shown in FIG. 6, region Q3 defined by straight lines passing through the human eye mirror position E' and two ends of the absorbing element includes region Q1, and all background stray light in the stray light range can be absorbed. It should be noted that when the length of the absorbing element 640 is changed, the range of the region Q3 also change accordingly, but the region Q3 may be at least greater than or equal to the region Q1, such that background stray light can be completely covered, and imaging quality is guaranteed. It can be understood that the absorbing element 640 has an edge extending in a direction perpendicular to the paper surface, and there are a plurality of straight lines passing through the edge and the human eye mirror position E', and the region defined between two planes passing through these straight lines is region Q3.

In the example shown in FIG. 6, an end of an absorbing element 640 is attached to the end (i.e., the end A2) of a beam splitter element 620 away from an image source element 610, and the end A2 is attached to an end of a reflective element 630 away from the image source element 610. It should be noted that the reflective element 630 and the image source element 610 in an optical imaging apparatus can also be arranged in other manners. Exemplarily, referring to the example shown in FIG. 1, an end of a reflective element 130 is not attached to an end of a beam splitter element 120, e.g., a non-light-transmitting bracket can be provided between the reflective element 130 and the beam splitter element 120 to connect them. In this case, an end of the absorbing element can also be attached to the end of the beam splitter element away from the image source element or the end of the reflective element away from the image source element, which is not limited herein. However, no matter what arrangement is adopted, the absorbing element 640 should be able to absorb stray light in the first light region and allow the real scene light in the second light region to pass through.

A thickness of an absorbing element 640 can also be adjusted according to requirements of a scene. In an example of the present application, the thickness of the absorbing element 640 is 0.5 mm ~ 5 mm.

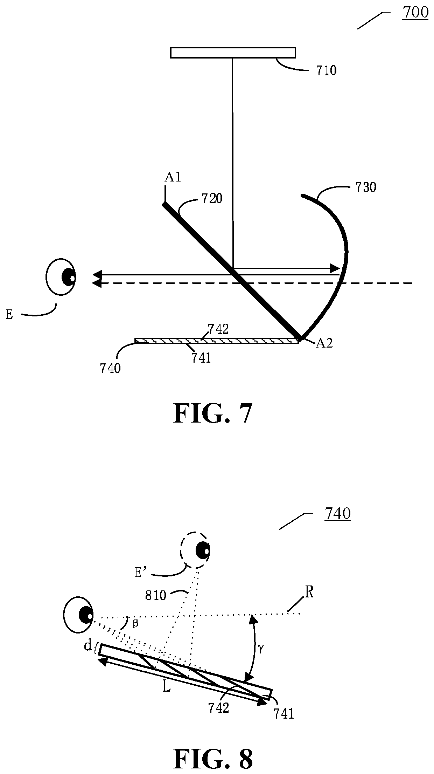

FIG. 7 illustrates a structural schematic diagram of an example of a head-mounted display device according to the invention.

As shown in FIG. 7, a head-mounted display device 700 includes an optical imaging apparatus and an absorbing element 740. The optical imaging apparatus includes an image source element 710, a beam splitter element 720, and a reflective element 730 that are aligned on an optical path. In an example of the present application, the absorbing element 740 includes a substrate 741 and a plurality of absorbing structures 742, the plurality of absorbing structures 742 are arranged sequentially at intervals, and the substrate is see-through. For example, the absorbing structure 742 can be a sheet arranged obliquely on the substrate 741, and respective sheets are arranged at intervals. The region defined by a human eye mirror position and each absorbing structure covers at least a portion of a first light region, and the region defined by a human eye position E and at least one gap covers real scene light in a second light region. Herein, the gap is formed by an interval between adjacent absorbing structures. Furthermore, arrangement of the substrate 741 causes the substrate 741 to allow real scene light to pass through.

FIG. 8 illustrates a structural schematic diagram of an example of an absorbing element according to the invention.

As shown in FIG. 8, a substrate 741 of an absorbing element 740 has a flat plate structure, and there may be an included angle γ between the substrate plane and a main optical axis. In FIG. 7, the substrate 741 of the absorbing element can also be parallel to the main optical axis, which may not be limited herein. In addition, there is an included angle β between respective absorbing structure 742 in the absorbing element 740 and the main optical axis, and by arranging or adjusting the included angle β and gap size of respective absorbing structures 742, stray light in a first light region can be absorbed and real scene light in a second light region can pass through.

Optionally, respective absorbing structures 742 are used to absorb light, and respective absorbing structures can each be used to define a light-shielding region for a human eye mirror position E'. The light-shielding regions corresponding to adjacent absorbing structures 742 are partially overlapped or just joined, and light-shielding regions corresponding to respective absorbing structures 742 are further combined to cover a first light region. Referring to the example shown in FIG. 8, a light absorbing junction region 810 defined by a first end (e.g., terminal end) of a first absorbing structure and a second end (e.g., head end) of a second absorbing structure that are adjacent in respective absorbing structures passes through human eye mirror position, in which the respective absorbing structures are arranged sequentially at intervals, such that respective light-shielding regions corresponding to respective absorbing structures can cover (or just cover) a first light region after being combined. Herein, the first end of the first absorbing structure and the second end of the second absorbing structure are adjacent to each other, and a second end of the first absorbing structure and a first end of the second absorbing structure are away from each other.

In an example, at least part of adjacent absorbing structures 742 from the absorbing structures 742 arranged sequentially at intervals from a first end (the end adjacent to the human eye position E) to a second end (the end far away from the human eye position E) of an absorbing element 740 are arranged as follows, a first absorbing structure of the adjacent absorbing structures 742 is adjacent to the human eye position E. Each absorbing structure 742 has a first end (an end adjacent to the human eye position E) arranged on a first side of the absorbing structure 742, and a second end (an end away from the human eye position E) arranged on a second side of the absorbing structure 742, where the first side and the second side are arranged oppositely. A plane passing through the first end of the first absorbing structure and the second end of the second absorbing structure (indicated by line 810 in the drawings) passes through a human eye mirror position, such that respective light-shielding regions corresponding to respective absorbing structures can cover (or just cover) a first light region after being combined.

In addition, respective gaps between adjacent absorbing structures 742 can each form a light-transmitting region for the human eye position E, the light-transmitting regions corresponding to adjacent gaps are partially overlapped or just joined, and light-transmitting regions corresponding to respective gaps are further combined to cover a second light region. Referring to the example shown in FIG. 8, a plane in which each absorbing structure 742 is located passes through the human eye position E, such that the plane in which each absorbing structure 742 is located just coincides with a direction of line-of-sight of the human eye without blocking the field of vision of a user, and respective light-transmitting regions corresponding to respective gaps can just cover a second light region after being combined.

In an example of the present application, an inclination angle of respective absorbing structure relative to a main optical axis of an optical imaging apparatus is within a line-of-sight angle range. Referring to the example shown in FIG. 8, β corresponding to respective absorbing structure is within the line-of-sight angle range. As described above, the minimum line-of-sight angle in a line-of-sight angle range is defined by a human eye position and an end of a beam splitter element away from an image source element (e.g., 404 in FIG. 4B), and the maximum line-of-sight angle in a line-of-sight angle range is defined by human eye position and viewing angle (e.g., 403 in FIG. 4B). Therefore, it can be ensured that light passing through respective gap is light in the direction of line-of-sight of a human eye.

It should be noted that, thickness d and length L of a substrate 741 in an embodiment of the present application can vary with different application scenarios. In an example of the present application, thickness d of a substrate 741 can be between 0.1 mm and 10 mm, and length L of the substrate 741 can be between 2 mm and 40 mm.

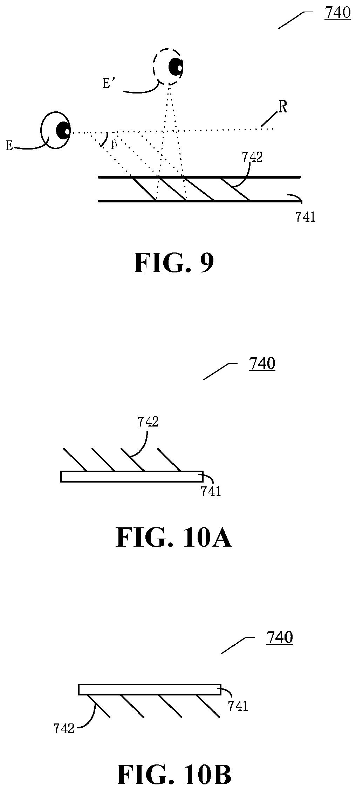

FIG. 9 illustrates a structural schematic diagram of an example of an absorbing element according to an embodiment of the present application.

As shown in FIG. 9, included angles β between planes in which respective absorbing structures 742 of absorbing element 740 are located and a main optical axis R are equal, i.e., the planes in which respective absorbing structures are located are parallel to each other. It should be noted that, in order to transmit real scene light in a second light region while absorbing stray light in a first light region, intervals between respective absorbing structures 742 in the absorbing element 740 can be diverse or varying, e.g., a plane in which two ends of adjacent absorbing structures adjacent to each other are located can pass through a human eye mirror position. For example, a plane in which two ends, on two sides of the absorbing element 740, of adjacent absorbing structures and adjacent to each other are located can pass through a human eye mirror position. In addition, substrate of the absorbing element 740 can also have other non-planar shapes (e.g., a substrate having a curved surface or a concave shaped structure), such that real scene in a second light region can be seen at a human eye position.

In an example of the present application, a head-mounted display device further includes an optical path correcting element 220, and the optical path correcting element can be configured by at least one of at least one lens component and a reflective component. Also, structure of the optical path correcting element, and the position of the optical path correcting element in or relative to an optical imaging apparatus enable the optical path correcting element to allow light transmitted through respective gaps (e.g., parallel transmission) to reach a human eye position. It should be understood that when parameters such as arrangement angle, size, and interval about respective absorbing structures change, the structure and position of the optical path correcting element may also need to be adjusted accordingly, and the optical path correcting element can also be configured to have a plurality of optical path correcting structures arranged sequentially, thus specific structure and position of the optical path correcting element may not be limited.

As examples of absorbing elements as illustrated in FIGs. 7-9, various absorbing structures can be embedded in a substrate. Alternatively, respective absorbing structure 742 of an absorbing element 740 can also be attached to the surface of the substrate 741.

FIGs. 10A-10D respectively illustrate structural schematic diagrams of different examples of an absorbing element according to embodiments of the present application.

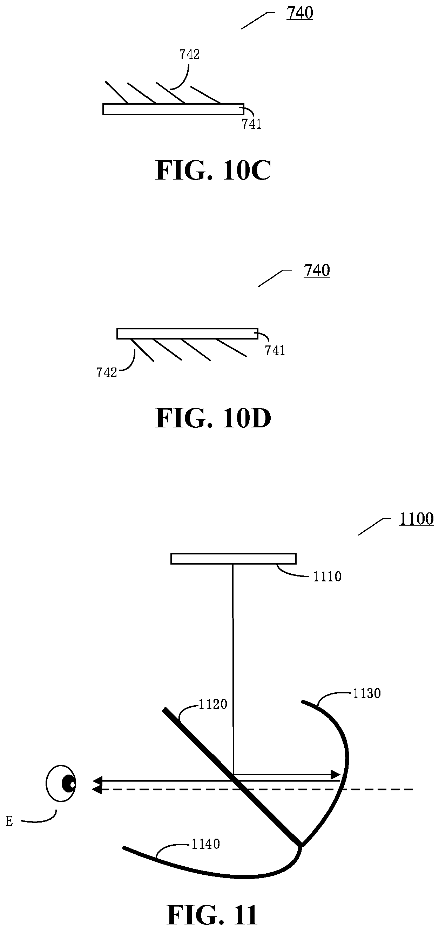

As shown in FIG. 10A, respective absorbing structures 742 are attached to an upper surface of a substrate 741, and the respective absorbing structures are parallel to each other. As shown in FIG. 10B, respective absorbing structures 742 are attached to a lower surface of a substrate 741, and the respective absorbing structures are parallel to each other. As shown in FIG. 10C, respective absorbing structures 742 are attached to an upper surface of a substrate 741, and the absorbing structures 742 are not parallel to each other, e.g., each of the planes in which the absorbing structures 742 are located can pass through a human eye position. As shown in FIG. 10D, respective absorbing structures 742 are attached to a lower surface of a substrate 741, and the absorbing structures 742 are not parallel to each other. Herein, respective absorbing structures can vary in height. In an example, the height of an absorbing structure may be between 0.2mm and 20mm, the thickness of the absorbing structure can be between 0.01mm and 5mm, and the thickness of the substrate can be between 0.1mm and 10mm.

In addition, respective absorbing structures can also employ a light absorbing coating 743 to implement light absorption, e.g., the light absorbing coating is attached to the absorbing structure 742. In an example of the present application, a plane in which two ends of adjacent light absorbing coatings are located passes through a human eye mirror position, and the two ends are at on opposite sides and adjacent to each other. Planes in which respective light absorbing coatings are located pass through a human eye position. Herein, the absorbing band of the light absorbing coating can include the entire visible light band to absorb visible light.

In some embodiments, respective absorbing structures 742 shown in FIGs. 7-10D are also distributed as a micro-structure array, and absorbing elements can employ holographic optical elements or surface-relief gratings, etc.

FIG. 11 illustrates a structural schematic diagram of an example of a head-mounted display device according to an embodiment of the present application.

As shown in FIG. 11, a head-mounted display device 1100 includes an optical imaging apparatus and an absorbing element 1140. The optical imaging apparatus includes an image source element 1110, a beam splitter element 1120, and a reflective element 1130 that are aligned on an optical path. Herein, the absorbing element 1140 is a curved plate, thus the absorbing element 1140 is not limited to a flat plate.

It should be noted that the elements, structures and arrangements of the elements in the optical imaging apparatus shown in the above drawings are only used as examples, and more other elements or structures not listed herein can also be employed as supplement. In an example of the present application, an image source element can further include an aberration corrector 111 to correct aberration in an optical imaging apparatus together with a beam splitter element and a reflective element, which can further facilitate improving the imaging quality. Optionally, an aberration corrector can employ a lens assembly to reduce light emission angle of pixels on an image source element, which is more conducive to blocking stray light under a head-mounted display device, thereby improving user experience when the user wears it.

In addition, the optical path design methods described above in conjunction with the appended drawings can also be adjusted, e.g., optical path design methods such as Birdbath and free-form surface prisms can be employed, which should not be limited here.

For example, a head-mounted display device disclosed in the present application can also include an optical imaging apparatus and an absorbing element. The optical imaging apparatus includes an image source element, a beam splitter element, and a reflective element. In the direction of optical path, the beam splitter element and the reflective element are sequentially arranged downstream of the image source element. For example, the beam splitter element is arranged obliquely below, e.g., directly below, the image source element, and the reflective element is arranged on a side of the beam splitter element. Virtual image light projected by the image source element is sequentially reflected on the beam splitter element and the reflective element, and then passes through the beam splitter element. An end of the beam splitter element away from the image source element can be connected to an end of the reflective element away from the image source element. An end of the absorbing element is connected to the junction of the beam splitter element and the reflective element, and the absorbing element includes a substrate and a plurality of absorbing structures arranged at intervals, each absorbing structure has a head end on a first side of the substrate (adjacent to the beam splitter element) and a terminal end on a second side of the substrate (opposite to the first side), a plane passing through head ends and terminal ends of at least a portion of (e.g., at least three) adjacent absorbing structures intersects the normal of the light-emitting surface of the image source element at a point.

Optionally, the normal of the light-emitting surface of an image source element passes through the center of a beam splitter element.

In an embodiment, planes in which at least a portion of (e.g., at least three) adjacent absorbing structures are located all intersect, on the same straight line, a plane passing through the beam splitter element and parallel to the light-emitting surface of the image source element.

In an embodiment, the plurality of planes in which the plurality of absorbing structures are located are parallel to each other.

Exemplary embodiments are described above by the detailed description set forth in conjunction with the appended drawings, but do not represent all embodiments that may implement the present application. The term "exemplary" used throughout the present application means "serving as an example, instance, or illustration", and not "preferred" or "advantageous" over other embodiments. The detailed description includes specific details for the purpose of providing an understanding of the described techniques. These techniques, however, may be practiced without these specific details. In some instances, well-known structures and apparatuses are shown in block diagram form in order to avoid obscuring the concepts of the described embodiments.

The foregoing description of the present disclosure is provided to enable a person skilled in the art to implement or use the present disclosure. Various modifications to the present disclosure will be readily apparent to those skilled in the art, and the generic principles defined herein may be applied to other variations without departing from the scope of the present invention defined by the appended claims.

## Claims

1. A head-mounted display device (200, 600, 700, 1100), comprising:
an optical imaging apparatus (100, 400), comprising an image source element (110, 410, 610, 710, 1110), a beam splitter element (120, 420, 620, 720, 1120), and a reflective element (130, 430, 630, 730, 1130) configured to be aligned on an optical path; and
an absorbing element (210, 640, 740), a structure of the absorbing element (210) and a position of the absorbing element (210, 640, 740) relative to the optical imaging apparatus (100, 400) configured to enable the absorbing element (210, 640, 740) to absorb at least a portion of stray light in a first light region and cause real scene light in a second light region to pass through, the first light region being defined by a human eye mirror position and two ends of the beam splitter element (120, 420, 620, 720, 1120), the second light region being defined by a human eye position, a human eye viewing angle, and an end of the beam splitter element (120, 420, 620, 720, 1120) away from the image source element (110, 410, 610, 710, 1110), wherein the human eye mirror position is a mirror symmetry point of the human eye position with respect to the beam splitter element (120, 420, 620, 720, 1120),
wherein the second light region represents a line-of-sight range (Q2) between the maximum line-of-sight direction (403) being defined by the human eye position (E) and the viewing angle of the human eye, and the minimum line-of-sight direction (404) being defined by the human eye position (E) and the end (A2) of the beam splitter element away from the image source element, wherein the absorbing element (740) comprises a substrate (741) and a plurality of absorbing structures (742), the plurality of absorbing structures (742) are arranged sequentially at intervals,
a region defined by the human eye mirror position and each of the plurality of absorbing structures (742) covers at least a portion of the first light region, and a region defined by the human eye position and at least one gap covers real scene light in the second light region, wherein the gap is formed by an interval between adjacent absorbing structures (742); and
the substrate (741) is arranged to enable the substrate (741) to allow the real scene light to pass through.

2. The head-mounted display device of claim 1, wherein an inclination angle of the plurality of absorbing structures (742) relative to a main optical axis of the optical imaging apparatus is within a line-of-sight angle range,
a minimum line-of-sight angle in the line-of-sight angle range is defined by the human eye position and the end of the beam splitter element (720) away from the image source element (710), and a maximum line-of-sight angle in the line-of-sight angle range is defined by the human eye position and the human eye viewing angle.

3. The head-mounted display device of claim 1 or 2, wherein a plane in which a first end of a first absorbing structure (742) and a second end of a second absorbing structure (742) passes through the human eye mirror position, the first absorbing structure (742) and the second absorbing structure (742) from the plurality of absorbing structures (742) are adjacent to each other, the first end of the first absorbing structure (742) and the second end of the second absorbing structure (742) are respectively located on two sides of the absorbing element (210) and adjacent to each other, and a second end of the first absorbing structure (742) and a first end of the second absorbing structure (742) are respectively located on two sides of the absorbing element (710) and away from each other.

4. The head-mounted display device of claim 3, wherein a plurality of planes in which the plurality of absorbing structures (742) are located all pass through the human eye position, or planes in which the plurality of absorbing structures (742) are located are parallel to each other.

5. The head-mounted display device of any one of claims 1 to 4, wherein the plurality of absorbing structures (742) are attached to a surface of the substrate (741), or the plurality of absorbing structures (742) are embedded in the substrate (741).

6. The head-mounted display device of any one of claims 1 to 5, wherein the plurality of absorbing structures (742) are distributed as a micro-structure array.

7. The head-mounted display device of any one of claims 1 to 6, wherein the absorbing element is configured as a flat plate or a curved plate.

8. The head-mounted display device of any one of claims 1 to 7, wherein the absorbing structure (742) comprises a light absorbing coating.

9. The head-mounted a display device of claim 8, wherein an absorbing band of the light absorbing coating comprises an entire visible light band.

10. The head-mounted display device of any one of claims 1 to 9, wherein an end of the absorbing element (210) is attached to at least one of the end of the beam splitter element (120) away from the image source element (110) and an end of the reflective element (130) away from the image source element (110).

11. The head-mounted display device of any one of claims 1 to 10, wherein in a direction of the optical path, the beam splitter element (720) and the reflective element (730) are sequentially arranged downstream of the image source element (710).

12. The head-mounted display device of claim 1 or 2, wherein the substrate (741) comprises a first side adjacent to the beam splitter element (720) and a second side opposite to the first side, each of the plurality of absorbing structures (742) has a head end on the first side of the substrate (741) and a terminal end on the second side of the substrate (741), a plane passing through the head end and the terminal end of at least a portion of adjacent absorbing structures (742) intersects a normal of a light-emitting surface of the image source element (710) at a point.

13. The head-mounted a display device of claim 12, wherein planes in which the at least a portion of adjacent absorbing structures (742) are located all intersect, on a same straight line, a plane passing through the beam splitter element (720) and parallel to the light-emitting surface of the image source element (710).

## Patentansprüche

1. Datenhelm-Vorrichtung (200, 600, 700, 1100), umfassend:
eine optische Bildgebungsvorrichtung (100, 400), umfassend ein Bildquellenelement (110, 410, 610, 710, 1110), ein Strahlteilerelement (120, 420, 620, 720, 1120) und ein reflektierendes Element (130, 430, 630, 730, 1130), dazu ausgebildet, in einem Strahlengang ausgerichtet zu werden; und
ein Absorptionselement (210, 640, 740), wobei eine Struktur des Absorptionselements (210) und eine Position des Absorptionselements (210, 640, 740) relativ zur optischen Bildgebungsvorrichtung (100, 400) so ausgebildet sind, dass sie dem Absorptionselement (210, 640, 740) ermöglichen, wenigstens einen Teil des Streulichts in einem ersten Lichtbereich zu absorbieren und Realszenenlicht in einem zweiten Lichtbereich durchzulassen, wobei der erste Lichtbereich durch eine Menschenaugen-Spiegelposition und zwei Enden des Strahlteilerelements (120, 420, 620, 720, 1120) definiert ist, wobei der zweite Lichtbereich durch eine Menschenaugenposition, einen Menschenaugen-Betrachtungswinkel und ein Ende des Strahlteilerelements (120, 420, 620, 720, 1120) entfernt vom Bildquellenelement (110, 410, 610, 710, 1110) definiert ist, wobei die Menschenaugen-Spiegelposition ein Spiegelsymmetriepunkt der Menschenaugenposition in Bezug auf das Strahlteilerelement (120, 420, 620, 720, 1120) ist,
wobei der zweite Lichtbereich einen Sichtlinienbereich (Q2) zwischen der maximalen Sichtlinienrichtung (403), die durch die Menschenaugenposition (E) und den Betrachtungswinkel des Menschenauges definiert ist, und der minimalen Sichtlinienrichtung (404), die durch die Menschenaugenposition (E) und das vom Bildquellenelement entfernte Ende (A2) des Strahlteilerelements definiert ist, wobei das Absorptionselement (740) ein Substrat (741) und eine Vielzahl von Absorptionsstrukturen (742) umfasst, wobei die Vielzahl von Absorptionsstrukturen (742) nacheinander in Abständen angeordnet ist,
ein Bereich, der durch die Menschenaugenposition und jede der Vielzahl von Absorptionsstrukturen (742) definiert ist, wenigstens einen Abschnitt des ersten Lichtbereichs abdeckt, und ein Bereich, der durch die Menschenaugenposition und wenigstens einen Spalt definiert ist, Realszenenlicht im zweiten Lichtbereich abdeckt, wobei der Spalt durch einen Abstand zwischen benachbarten Absorptionsstrukturen (742) gebildet wird; und
das Substrat (741) so angeordnet ist, dass dem Substrat (741) ermöglicht wird, das Realszenenlicht durchzulassen.

2. Datenhelm-Vorrichtung nach Anspruch 1, wobei ein Neigungswinkel der Vielzahl von Absorptionsstrukturen (742) relativ zu einer optischen Hauptachse der optischen Bildgebungsvorrichtung innerhalb eines Sichtlinienwinkel-Bereichs liegt,
ein minimaler Sichtlinienwinkel im Sichtlinienwinkel-Bereich durch die Menschenaugenposition und das vom Bildquellenelement (710) entfernte Ende des Strahlteilerelements (720) definiert ist und ein maximaler Sichtlinienwinkel im Sichtlinienwinkel-Bereich durch die Menschenaugenposition und den Menschenaugen-Betrachtungswinkel definiert ist.

3. Datenhelm-Vorrichtung nach Anspruch 1 oder 2, wobei eine Ebene, in der ein erstes Ende einer ersten Absorptionsstruktur (742) und ein zweites Ende einer zweiten Absorptionsstruktur (742) angeordnet sind, durch die Menschenaugen-Spiegelposition verläuft, die erste Absorptionsstruktur (742) und die zweite Absorptionsstruktur (742) aus der Vielzahl von Absorptionsstrukturen (742) aneinander angrenzen, das erste Ende der ersten Absorptionsstruktur (742) und das zweite Ende der zweiten Absorptionsstruktur (742) jeweils an zwei Seiten des Absorptionselements (210) angeordnet sind und aneinander angrenzen, und ein zweites Ende der ersten Absorptionsstruktur (742) und ein zweites Ende der zweiten Absorptionsstruktur (742) jeweils an zwei Seiten des Absorptionselements (710) angeordnet sind und voneinander entfernt sind.

4. Datenhelm-Vorrichtung nach Anspruch 3, wobei eine Vielzahl von Ebenen, in denen die Vielzahl von Absorptionsstrukturen (742) angeordnet ist, alle durch die Menschenaugenposition verlaufen, oder Ebenen, in denen die Vielzahl von Absorptionsstrukturen (742) angeordnet ist, parallel zueinander sind.

5. Datenhelm-Vorrichtung nach einem der Ansprüche 1 bis 4, wobei die Vielzahl von Absorptionsstrukturen (742) auf einer Fläche des Substrats (741) angebracht ist oder die Vielzahl von Absorptionsstrukturen (742) in das Substrat (741) eingebettet ist.

6. Datenhelm-Vorrichtung nach einem der Ansprüche 1 bis 5, wobei die Vielzahl von Absorptionsstrukturen (742) als eine Mikrostrukturgruppe verteilt ist.

7. Datenhelm-Vorrichtung nach einem der Ansprüche 1 bis 6, wobei das Absorptionselement als eine flache Platte oder eine gekrümmte Platte ausgebildet ist.

8. Datenhelm-Vorrichtung nach einem der Ansprüche 1 bis 7, wobei die Absorptionsstruktur (742) eine lichtabsorbierende Beschichtung umfasst.

9. Datenhelm-Vorrichtung nach Anspruch 8, wobei eine Absorptionswellenlänge der lichtabsorbierenden Beschichtung eine gesamte sichtbare Lichtwellenlänge umfasst.

10. Datenhelm-Vorrichtung nach einem der Ansprüche 1 bis 9, wobei ein Ende des Absorptionselements (210) am vom Bildquellenelement (110) entfernen Ende des Strahlteilerelements (120) oder/und einem vom Bildquellenelement (110) entfernten Ende des Reflexionselements (130) angebracht ist.

11. Datenhelm-Vorrichtung nach einem der Ansprüche 1 bis 10, wobei in eine Richtung des Strahlengangs das Strahlteilerelement (720) und das Reflexionselement (730) nacheinander stromabwärts vom Bildquellenelement (710) angeordnet sind.

12. Datenhelm-Vorrichtung nach Anspruch 1 oder 2, wobei das Substrat (741) eine an das Strahlteilerelement (720) angrenzende erste Seite und eine der ersten Seite gegenüberliegende zweite Seite umfasst, wobei jede der Vielzahl von Absorptionsstrukturen (742) ein vorderes Ende auf der ersten Seite des Substrats (741) und ein hinteres Ende auf der zweiten Seite des Substrats (741) aufweist, wobei eine Ebene, die durch das vordere Ende und das hintere Ende wenigstens eines Abschnitts angrenzender Absorptionsstrukturen (742) verläuft, eine Normale einer Lichtaustrittsfläche des Bildquellenelements (710) an einem Punkt schneidet.

13. Datenhelm-Vorrichtung nach Anspruch 12, wobei Ebenen, in denen wenigstens ein Teil angrenzender Absorptionsstrukturen (742) angeordnet ist, alle auf einer gleichen Geraden eine Ebene, die durch das Strahlteilerelement (720) verläuft und parallel zur Lichtaustrittsfläche des Bildquellenelements (710) ist, schneiden.

## Revendications

1. Dispositif d'affichage visiocasque (200, 600, 700, 1100), comprenant :
un appareil d'imagerie optique (100, 400), comprenant un élément de source d'image (110, 410, 610, 710, 1110), un élément séparateur de faisceau (120, 420, 620, 720, 1120) et un élément réfléchissant (130, 430, 630, 730, 1130) configuré pour être aligné sur un trajet optique ; et
un élément absorbant (210, 640, 740), une structure de l'élément absorbant (210) et une position de l'élément absorbant (210, 640, 740) par rapport à l'appareil d'imagerie optique (100, 400) configurée pour permettre à l'élément absorbant (210, 640, 740) d'absorber au moins une partie d'une lumière parasite dans une première zone lumineuse et faire en sorte qu'une lumière de scène réelle dans une deuxième zone lumineuse traverse, la première zone lumineuse étant définie par une position de miroir d'œil humain et deux extrémités de l'élément séparateur de faisceau (120, 420, 620, 720, 1120), la deuxième zone de lumière étant définie par une position d'œil humain, un angle de visualisation d'œil humain et une extrémité de l'élément séparateur de faisceau (120, 420, 620, 720, 1120) éloignée de l'élément de source d'image (110, 410, 610, 710, 1110), dans lequel la position de miroir d'œil humain est un point de symétrie de miroir de la position d'œil humain par rapport à l'élément séparateur de faisceau (120, 420, 620, 720, 1120),
dans lequel la deuxième zone de lumière représente une plage de ligne de mire (Q2) entre la direction de ligne de mire maximale (403) définie par la position d'œil humain (E) et l'angle de visualisation d'œil humain, et la direction de ligne de mire minimale (404) définie par la position d'œil humain (E) et l'extrémité (A2) de l'élément séparateur de faisceau éloignée de l'élément de source d'image, dans lequel l'élément absorbant (740) comprend un substrat (741) et une pluralité de structures absorbantes (742), la pluralité de structures absorbantes (742) sont disposées séquentiellement à des intervalles,
une zone définie par la position de miroir d'œil humain et chacune de la pluralité de structures absorbantes (742) couvre au moins une partie de la première zone de lumière, et une zone définie par la position d'œil humain et au moins un écart couvre une lumière de scène réelle dans la deuxième zone de lumière, dans lequel l'écart est constitué par un intervalle entre des structures absorbantes adjacentes (742) ; et
le substrat (741) est disposé pour permettre au substrat (741) de permettre à la lumière de scène réelle de traverser.

2. Le dispositif d'affichage visiocasque de la revendication 1, dans lequel un angle d'inclinaison de la pluralité de structures absorbantes (742) par rapport à un axe optique principal de l'appareil d'imagerie optique s'inscrit dans une plage angulaire de ligne de mire,
un angle de ligne de mire minimal dans la plage angulaire de ligne de mire est défini par la position d'œil humain et l'extrémité de l'élément séparateur de faisceau (720) éloignée de l'élément de source d'image (710), et un angle de ligne de mire maximal dans la plage angulaire de ligne de mire est défini par la position d'œil humain et l'angle de visualisation d'œil humain.

3. Le dispositif d'affichage visiocasque de la revendication 1 ou 2, dans lequel un plan dans lequel une première extrémité d'une première structure absorbante (742) et une deuxième extrémité d'une deuxième structure absorbante (742) traverse la position de miroir d'œil humain, la première structure absorbante (742) et la deuxième structure absorbante (742) issues de la pluralité de structures absorbantes (742) sont adjacentes l'une à l'autre, la première extrémité de la première structure absorbante (742) et la deuxième extrémité de la deuxième structure absorbante (742) sont respectivement situées sur deux côtés de l'élément absorbant (210) et adjacentes l'une à l'autre, et une deuxième extrémité de la première structure absorbante (742) et une première extrémité de la deuxième structure absorbante (742) sont respectivement situées sur deux côtés de l'élément absorbant (710) et éloignées l'une de l'autre.

4. Le dispositif d'affichage visiocasque de la revendication 3, dans lequel une pluralité de plans dans lesquels la pluralité de structures absorbantes (742) sont situées traversent tous la position d'œil humain, ou de plans dans lesquels la pluralité de structures absorbantes (742) sont situées sont parallèles l'un à l'autre.

5. Le dispositif d'affichage visiocasque de l'une quelconque des revendications 1 à 4, dans lequel la pluralité de structures absorbantes (742) sont rattachées à une surface du substrat (741), ou la pluralité de structures absorbantes (742) sont incorporées dans le substrat (741).

6. Le dispositif d'affichage visiocasque de l'une quelconque des revendications 1 à 5, dans lequel la pluralité de structures absorbantes (742) sont distribuées en tant que matrice de micro-structures.

7. Le dispositif d'affichage visiocasque de l'une quelconque des revendications 1 à 6, dans lequel l'élément absorbant est configuré comme une plaque plate ou une plaque incurvée.

8. Le dispositif d'affichage visiocasque de l'une quelconque des revendications 1 à 7, dans lequel la structure absorbante (742) comprend un revêtement d'absorption de lumière.

9. Le dispositif d'affichage visiocasque de la revendication 8, dans lequel une bande absorbante de revêtement d'absorption de lumière comprend une bande de lumière entièrement visible.

10. Le dispositif d'affichage visiocasque de l'une quelconque des revendications 1 à 9, dans lequel une extrémité de l'élément absorbant (210) est rattachée à au moins une de l'extrémité de l'élément séparateur de faisceau (120) éloignée de l'élément de source d'image (110) et une extrémité de l'élément réfléchissant (130) éloignée de l'élément de source d'image (110).

11. Le dispositif d'affichage visiocasque de l'une quelconque des revendications 1 à 10, dans lequel dans une direction du trajet optique, l'élément séparateur de faisceau (720) et l'élément réfléchissant (730) sont séquentiellement disposés en aval de l'élément de source d'image (710).

12. Le dispositif d'affichage visiocasque de la revendication 1 ou 2, dans lequel le substrat (741) comprend un premier côté adjacent à l'élément séparateur de faisceau (720) et un deuxième côté opposé au premier côté, chacune de la pluralité de structures absorbantes (742) présente une extrémité de tête sur le premier côté du substrat (741) et une extrémité de terminal sur le deuxième côté du substrat (741), un plan traversant l'extrémité de tête et l'extrémité de terminal d'au moins une partie de structures absorbantes adjacentes (742) coupe une normale à une surface d'émission de lumière de l'élément de source d'image (710) en un point.

13. Le dispositif d'affichage visiocasque de la revendication 12, dans lequel des plans dans lesquels l'au moins une partie de structures absorbantes adjacentes (742) sont situés coupent tous, sur une même ligne droite, un plan traversant l'élément séparateur de faisceau (720) et parallèle à la surface d'émission de lumière de l'élément de source d'image (710).
